# EUROPEAN PATENT SPECIFICATION

(11) **EP 4 288 336 B1**
(45) Date of publication and mention of the grant of the patent: **17.06.2026**
(21) Application number: 22711281.0
(22) Date of filing: 08.02.2022
(51) Int. Cl.: B63C 9/00

(54) **LOCATION APPARATUS**
ORTUNGSGERÄT
APPAREIL DE LOCALISATION

(30) Priority: 08.02.2021 GB 202101727
(43) Date of publication of application: 13.12.2023
(73) Proprietor: Zelim Limited, Denbigh, Denbighshire, Wales LL16 4PW (GB)
(72) Inventor: MAYALL, Samuel, Denbighshire LL16 4PW (GB); LOTHIAN, Douglas, Longniddry EH32 0SF (GB)
(74) Representative: Dehns
(86) International application number: PCT/GB2022/050335
(87) International publication number: WO 2022/167823

(56) References cited:
- WO-A1-2012/142049
- WO-A1-2018/140549
- KR-A- 20190 066 873

## Description

The present invention relates to location apparatus and a method of locating a body.

WO2019/158904 discloses an embodiment of an unmanned lifeboat which has a hull with a transom opening, and a fo'c'sle closed by a rounded top deck that is able to provide accommodation for survivors. The aft deck as such is generally U-shaped with a cut-out open at the transom, which is vestigial with two small port and starboard parts. Within the cut-out is a boarding assistance ramp. This is level with the aft deck at its forward end and slopes down to the transom. It extends aft of this by a short distance to enable survivors to swim and crawl onto it.

For guidance to reach the vicinity of the survivors, the lifeboat is equipped with a communication apparatus including a receiver for receiving survivor location data. In addition, the navigation apparatus with which the lifeboat is equipped includes a GPS system of its own, and a compass. The lifeboat is also equipped with a control system. The latter computes a course to the survivors by comparing its and survivor positions. The control unit has an output module for controlling the propulsion units to drive the lifeboat to the survivor position.

In WO2019/158904, the survivor location data came from any of the following:
1. Satellite relayed heading data from a survivor worn PLB (Personal Locator Beacon) or EPIRB (Emergency Position Indicating Radio Beacon) device;
2. The same data, including in addition GPS/ latitude and longitude coordinates;
3. Heading and/or coordinate data received direct from a PLB or EPIRB device;
4. Survivor coordinate data received from a base station, typically estimated from a last known position of a survivor transport vehicle such as a helicopter, as from an ELT (Emergency Locator Transmitter) or an SART (Search And Rescue Transponder) or an AIS-SART, an AIS being an Automatic Identification System.

WO 2018/140549 discloses an object detection system having at least one line array camera configured to capture one or more data sets within a field of view using a one-dimensional array of pixels within each line array camera. A control system is configured to determine when an object has moved through a field of view.

WO 2012/142049 discloses a system of using infrared cameras and target position acquisition techniques.

KR20190066873 discloses a method of rescue using a drone whereby an image of a region of interest is captured using a camera, and the system then determines whether an accident has occurred by comparing a change amount of a shape and position of any detected objections.

In this specification "radar apparatus" means: apparatus for detecting the presence, direction, distance, and speed of aircraft, ships, and other objects, by sending out pulses of radio waves which are reflected off the object back to the source.

Similarly "lidar apparatus" means: a detection system which works on the principle of radar, but uses light from a laser. Lidar apparatus can operate above or below the surface of water.

As used herein, "velocity" is used to mean vector velocity.

It may be desirable to provide a lifeboat, or any other vessel or user, with a self-contained location apparatus for survivors and the like.

According to a first aspect of the invention there is provided an apparatus for locating a body according to claim 1, comprising:
- a plurality of means for receiving emission and / or reflection from the body and for outputting a response in terms of at least one of presence and bearing when such emission or reflection is received,
- comparison means for comparing the output response from the different receiving means and generating a body present output if output responses received from at least two of the receiving means indicate substantially the same bearing,
- memory means for memorising such a body present output as a body location wherein the plurality of receiving means are configured to additionally output a response in terms of shape of the body when such emission or reflection is received, and wherein the comparison means is adapted to compare the shape output response from the different receiving means with a collection of body images to refine recognition of the body.

The body is preferably a human body, for example, a casualty that is in the water. The location apparatus may have wider application for locating other objects which are in the water.

Preferably at least one of the receiving means is adapted to output a response in terms of body range, whereby the body location can comprise a range and bearing of the body.

The comparing means can be adapted to generate a body present output if one receiving means receives a signal characteristic of its mode of operation at one bearing and another receiving means receives a signal characteristic of its different mode of operation at substantially the same bearing.

For instance, a human body is likely to emitted infra-red emission from the face at least even in a survival suit and the survival suit is likely to have fluorescent and/or reflective strips. The distinction is that a fluorescent / reflective strip can emit visible light in the presence of other light, such as ultraviolet light, visible light or infra-red light. In daylight the fluorescent / reflective strips may be seen in visible light, and in night time conditions the fluorescent strips may be seen using infra-red, for example, using a short wave infra-red transmitter (e.g., transmitting in a wavelength range of 1.3 to 4 µm). Reflective strips would reflect such incident light and produce an output at the receiving means. If a thermal sensor receives emission at a bearing and a visible light sensor receives light with the spectrum expected from fluorescent / reflective strips, the comparing means can output a body present output above a threshold of certainty not able to be reached with a single such output response.

Even without a face being visible, a thermal sensor is expected to be able to sense a temperature difference of a survival suit partially exposed to the air from that of the surrounding sea, at least at closer range. If the casualty is present in the water without a survival suit on then a clearer body image may be seen from the thermal sensor.

The plurality of receiving means may include a plurality of infra-red sensors, each with a sensitivity primarily in a particular range, for example, short wave infra-red range (1.3 - 4 µm), a medium wave infra-red range (3 - 8 µm) or a long wave infra-red range (7 - 14 µm). The receiving means may comprise at least a short wave infra-red receiving means and a long wave infra-red receiving means.

A thermal sensor and a visible light sensor are normally monocular and as such not well adapted to binocular range finding. Whilst they can be combined in binocular form for generating a response indicative of range, we prefer to provide another sensor able to time reflected emission from the sensor, such as a radar or a lidar sensor, for sensing the range of the body.

Alternatively or additionally, the thermal sensor may comprise an infrared (IR) sensor of the transceiver type having an IR emitter. This is able to operate on not only IR emitted by a body, but reflected from it as well. This may be advantageous for locating a body at night using reflective strips on the body. The IR emitter may emit IR light, say, in a short wave range, and the receiving means may be adapted to identify a reflection from a reflective strip on the body in the short wave IR range.

With reflection comes the ability to sense range. Range of the body may also be sensed through other parameters, such as the number of pixels present in a zoomed in image.

Further a reflective sensor, e.g., a transceiver aimed at visible reflections from reflective strips, may be better adapted to providing an output indicative of the shape of the body. If this corresponds to the expected shape of the body, this can be combined in the comparing means to increase the reliability of the body present output to be memorised.

Further provided the range is not too great and/or the thermal and visual sensors are sufficiently sensitive, they can provide an output of shape in much the same way as radar and lidar sensors can.

In the preferred embodiment of the invention all the comparing means are adapted to take account of shape output response from the sensors.

Further, where the sensors can provide shape output in a common format, preferably a visually recognisable image, this can be compared with a collection of possible body images for refining recognition of the body as a human body or not.

The location apparatus may comprise a database of body images.

The body images may be taken at different heights, for example, using images from vessels in real situations, drones or other aircraft. The body images may be taken from different directions, such as upwind, downwind, cross-wind, with the tide or current, against the tide or current, or side on to the tide or current. The body images may be of bodies wearing different types of clothing, for example, full survival suits or regular clothing. The images may be taken under a variety of sea states ranging from smooth to an extreme storm. The body images may be taken under different lighting conditions, from full daylight through to night time conditions. The body images may also comprise different images taken using the different receiving means. The body images may comprise full body images as well as head images. They may also comprise images of different survival clothing. Depending on the clothing and survival equipment worn by the casualty, the casualty may be floating in a face up configuration or may be in some other configuration. The comparison means can use image recognition and/or Al techniques to match images output from the receiving means against images in the database.

According to another aspect of the invention there is provided a method for locating a body using an apparatus for locating a body in accordance with any preceding statement, the method comprising:
receiving emission and/or reflection from a body at the plurality of receiving means for receiving emission and/or reflection from the body;
outputting from the receiving means a response in terms of presence and bearing when such emission or reflection is received;
comparing the output response from the different receiving means with the comparison means for comparing the output responses;
generating a body present output with the comparison means if output responses received from at least two of the receiving means indicate substantially the same bearing; and
memorising such a body present output as a body location at the memory means for memorising.

The methods associated with the use of the location apparatus may include the step of building a collection of body images suitable for use in the location apparatus. The methods may also include the step of matching one or more body images with an output response received from at least one of the receiving means.

According to one example, there is provided apparatus for locating a body, comprising:
- means for receiving data from the body in terms of at least one of presence, range and bearing thereof from each of the following included in the data receiving means:
   - a visible light image receiver or camera
   - an infrared or thermal image camera, receiver or transceiver
   - radar apparatus and /or lidar apparatus and
- means for processing data from the individual ones of the receiving means and combining it to form combined range and bearing a body present.

Preferred features of the earlier aspects can be freely combined with the features described in relation to this aspect and vice versa.

Preferably the apparatus includes means for creating an electronic image of the body present and its bearing.

Preferably the apparatus is adapted to discriminate between a plurality of bodies present and identify them separately, as by them individually presenting a different of imagine at any one point in time and/or having a perceptibly different range and/or bearing.

The apparatus preferably includes means for memorising characteristics of a type of body and comparing the electronic image of the or each of the bodies present to identify them as of the type.

Further apparatus preferably includes means for tracking changes in range and bearing of the individual bodies present.

The apparatus preferably includes inputs for a boat vessel or craft, hereinafter the "Vessel", on which the apparatus is installed as the velocity and heading of thereof, the apparatus being adapted to compute the velocity of the or each body present.

Further the apparatus is adapted to output conning data to the Vessel to cause it to approach and then to keep station with the bodies present, coming no closer than a specified distance or "electronic fence" from any one of them. For instance if the bodies are drifting at a certain velocity, and the Vessel has a greater windage, it will keep station at the electronic fence compensating with its propulsion system for the windage.

In addition to identify the bodies as of an expected type, whilst at the electronic fence, or whilst approaching it the location apparatus will be adapted to monitor the surface of the water for floating and / or partially submerged wreckage or other objects. It can be adapted to grade such objects as large and to be avoided and small and to be ignored bearing in mind that wreckage is often semi-submerged as upturned craft often are.

The apparatus is preferably further adapted to compute an approach to each body of the expected type to recover them one after the other, normally autonomously and normally with a recovery ramp / conveyor of the type described in our above referenced WO2019/158904, or the like ramp / conveyor.

To help understanding of the invention, a specific embodiment thereof will now be described by way of example only and with reference to the accompanying drawings, in which:

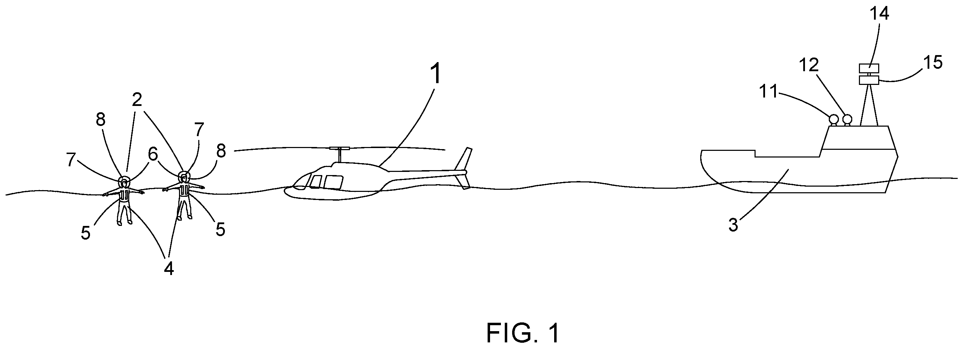

Figure 1 is a diagrammatic view of survivors and rescue vessel;
Figure 2 is a diagram of location apparatus of the invention and

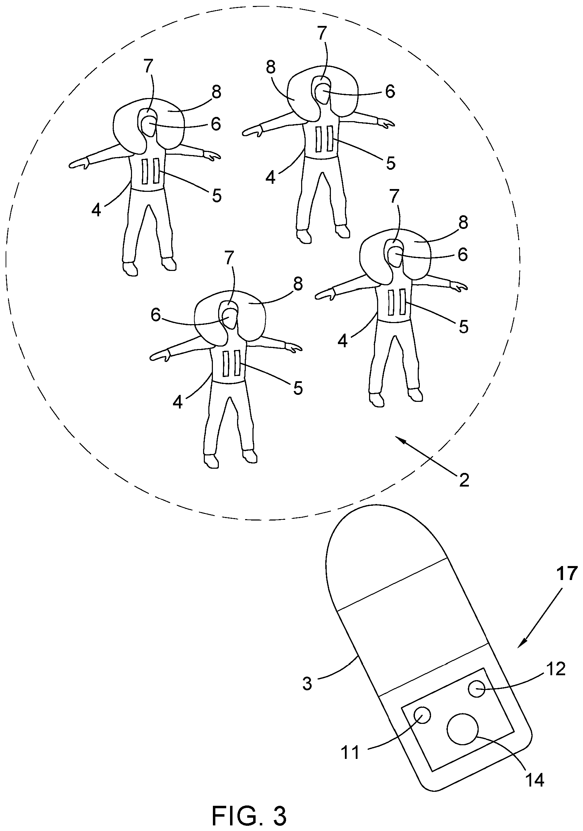

Figure 3 is a diagrammatic view of the location apparatus holding the rescue vessel at an electronic fence around the survivors.

Referring to the drawings, wreckage 1 of a ditched aircraft and survivors 2 from it are floating on the sea. A rescue vessel 3 is looking for them. The survivors 2 are wearing survival suits 4 having fluorescent and/or reflective strips 5 and an opening 6 in a hood 7 for the wearer's face. The survivors 2 are clearly visible in good light, their fluorescent/reflective strips 5 are visible in poorer light. Their faces are visible to a thermal camera, with their survival suits less visible due to their insulation. Nevertheless they may be visible, if warmed by ambient air for instance. If the survivor 2 is without protective clothing then they may be easier to see. The survivors' body shape may also be perceptible to radar and lidar, to an extent, depending on their orientation and height in the water. They may float on their back with their face up, held there by lifebuoys 8.

The vessel 3 is autonomous and equipped with predominantly forward facing visible light and thermal cameras 11,12 and radar and lidar scanners 14,15. While just one each of these cameras 11,12,14,15 is shown for simplicity coupled to the location apparatus 17, the location apparatus 17 may comprise a plurality of any such cameras. In particular, the location apparatus 17 may comprise multiple visible light cameras and thermal cameras 11,12 (receiving means). In this way, the multiple cameras 11,12 can be used to generate images that allow different fields of view, for example, a wide field of view of greater than 50° and narrower fields of view which are more focused on a region of interest, for example less than 30°. The different cameras 11,12 may be directed in different directions, for example, to build up a wider field of observation, e.g., up to 180°, 270° or even 360°. The different cameras 11,12 may be used to help improve resolution of the image output. The different cameras 11,12 may have maximum sensitivities in different wavelength regions to allow the received images to identify the body by observing different parts of the body images. The processing portion 16 may contain a database or library 20 of body images that are used to locate the body.

Locating a body may be seen as one or more of detecting, identifying and/or observing a body.

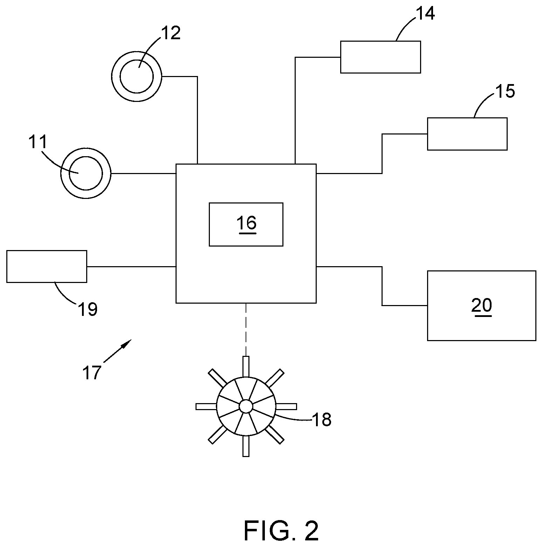

These four cameras 11,12,14,15 are in communication with a processing portion 16 of location apparatus 17. The communication can be hardwired when the processing portion is on board or wireless when the processing portion is remote as envisaged to be entirely feasible. Either is possible and no distinction is made here. The full lines used in Fig. 2 to connect the four cameras 11,12,14,15 to a processing portion 16 of the location apparatus 17 may be seen as representing hardwired connections, wireless connections or a mixture of hardwired and wireless connections.

On launch or deployment, as in our earlier application, the vessel's conning system 18 will initially steer the vessel towards the GPS position of the survivors' PLBs or the like, if such position is known or otherwise towards the survivors. Where GPS position is known it will be used to within 1 kilometre of the GPS position. Where GPS data is not available for any reason, the PLB transmission can still be used with direction finding equipment 19 on board to reach the same distance from the survivors where on one of the sensors 11,12,14,15 is expected to be able to see the survivors. As soon as this occurs, the sensor's bearing data is added to that of the RDF equipment 19 or the GPS position and the boat is conned towards the survivors. As the survivors are approached, where there are more than one, their individual bearings from the boat will deviate and at this stage the location apparatus 17 will tag them individually.

The processing portion 16 of the apparatus 17 operates at two levels. The first relies on the different nature of detection from the survivors 2. The thermal camera 12 is well adapted to detect at least the faces of the survivors 2 and is able to determine the relative bearing of them with respect to the vessel's heading, or at least those of them facing the vessel 3. The thermal camera 12 may be able to pick up more than just the face of the survivor 2 depending on the clothing of the survivor 2 and the sea conditions. Visible light camera 11 is well adapted to detect the survivors 2 on good light and reasonably well adapted to detect them in deteriorating light. In particular it is well adapted to detect the fluorescent / reflective strips 5 on the survivors' survival suits and or lights on them. It also can measure relative bearing of the survivors 2. At night time or in poor light conditions, an infra-red transmitter may be used to illuminate the scene and cause reflections to emit from reflective strips 5 on the survivors 2 which can be received by infra-red receiving means on the location apparatus 17. Infra-red illumination can produce an image with greater resolution of distance than with visible light. In a preferred embodiment a transmitter will be used to illuminate the area of view with a wavelength in the range of 1.3 - 4 µm. It may also be beneficial to illuminate the area with a long wave infra-red radiation in the range of 8 -12 µm.

For four survivors, the cameras 11,12 may not detect individual emitted thermal and visual images as the vessel 3 first approaches them from a distance. The processing unit 16 will though receive outputs from both indicating faces and fluorescent strips 5 on the same bearing and will determine with initial probability that there is a survivor present. The vessel 3 will be conned, either autonomously or remotely, towards the survivors 2. As it approaches the cameras 11,12 will discriminate that there is more than one survivor 2. The processing unit 16 may receive a different count of survivors 2 at their bearings due for instance to them facing different directions. It will memorise the number of survivors 2 having both visual and thermal outputs from the cameras 11,12 and electronically tag them and track their relative movement with respect to the vessel 3.

Arranging the cameras 11,12 as binocular pairs, gives accurate indications of range. Other range sensing measures can also be employed, such as using range detectors and using the image itself to determine the range, for example through counting the number of pixels that are visible when the image is zoomed in on. In favourable weather, the cameras 11,12 may also enable a remote coxswain to manoeuvre the vessel to within a clear view of the survivors 2.

At a more sophisticated level, the radar and lidar scanners 14,15 can output to the processing unit (processing portion 16) both bearing and range data. This is combined with the camera data in confirming the position of the tagged survivors. However for autonomous recovery of the survivors 2 their position determined in this manner is unlikely to be sufficiently accurate. Recovery by a powered ramp is expected to require positioning to within one metre or better.

From tens of metres, the visible light camera 11 and the thermal camera 12 are expected to be able to provide recognisable images. The radar and the lidar are too. The relative clarity of their individual images will vary according to prevailing conditions, day/night, sun/rain, wind and sea state.

The processing unit 16 may be adapted to combine the images of the survivors 2 from the four sensors 11,12, 14,15. Thus for instance a survivor facing away, but with outstretched arms having fluorescent strips 5 is able to be recognised as such without sight of his/her face. Where the operation is autonomous and not able to rely on human recognition, the processing unit 16 is provided with a library 20 of images of survivors at a multitude of orientations both in the horizontal plane and in the vertical plane to take account waves pitching and rolling the survivors. The processing unit is thus expected to be able to accurately identify the number survivors and keep track of them individually.

Certain wreckage may appear at first sight to be survivors, for instance an inflated but unoccupied lifebuoy. The processing unit can be programmed to ignore such wreckage, due to absence of outstretch arms or of any thermal emission, for instance, or indeed lack of sufficient similarity with any image in the library.

Once the survivors and the wreckage, including large objects such as the body of the helicopter are identified, electronically tagged and their position accurately recorded, the processing unit identifies an electronic fence around the survivors within which the vessel should not approach. The perimeter of the fence, and its distance from the individual survivors will be determined seamanship parameters.

The survivors can be expected to drift with wind and possibly tide. The vessel is expected to drift faster. The processing unit can be adapted for autonomous recovery of the survivors by control of the conning system 18 of the vessel, or indeed autonomous conning preparatory to pilot controlled recovery, to hold the vessel at the electronic fence, until an autonomous or pilot decision is made to breach the electronic fence and recover the survivors.

The invention is not intended to be restricted to the details of the above described embodiment, but solely by the appended claims. For instance, the thermal camera can be augmented or replaced by an infrared transceiver adapted to emit IR and receive its reflections. This and indeed the visible light and thermal cameras need not be forwards facing. They can be 360° devices, either multi-facetted, i.e. having multiple sensors with overlapping fields of view, or fisheye.

The life boat 3 may also include the features described in WO2019/158904. Thus within the location of the survivors 2, i.e. within tens of metres, but not close enough for him/her/them to necessarily swim to and board the lifeboat, the control unit may be adapted to use direct survivor location. For this it may be provided with visible light, e.g., binocularly arranged cameras mounted atop the bridge to scan the surrounding sea and detect survivors 2, typically by recognising their survival suits 4 by their yellow colour. In addition infrared cameras 12 may be mounted adjacent the visible light cameras 11 can detect heat emitted from the faces of the survivors 2. The individual survivors may be identified by the control unit 16 by numbers on their suits and/or even facial recognition technology. A wind direction and speed meter may also be provided. The control unit 16 can then manoeuvre the lifeboat 3 to head downwind of the survivors 3 and manoeuvre upwind to them positioning the recovery ramp with a nearest one of the survivors 3 for him/her to be drawn up the ramp and be pulled onboard, the ramp having been activated. This operation and indeed the initial approach to the survivors 3 can be fully under the control of the control unit 16,17; or alternatively control can be by a remote operator, utilising the GPS information and the camera information transmitted to the operator. The control unit 16,17 is expected to be able to utilise PLB data etc, provided that a plurality of PLB devices can be discriminated. Further the control unit is preferably programmed to keep track of the relative position of multiple survivors, including the ability to memorise the expected position of one or more survivors temporarily out of sight behind a wave. It can be expected that in the envisaged use of the lifeboat, in particular offshore, that survivors requiring rescuing will be wearing at least life jackets and normally survival suits and that these will be equipped with personal locator beacons ("PLBs"). Some PLBs transmit signals enabling tracking satellites to transmit to earth information for fixing the position of the PLB, whilst others in addition have GPS capability, whereby they can compute their position and transmit this directly.

The invention has been described in the context of survivors 2 equipped with survival suits 4. The invention can be useful in other man-overboard and rescue situations, where survivors 3 may be wearing merely ordinary clothes. Necessarily these will be more demanding of the location apparatus 17 with image recognition playing a more important part in locating a survivor 3.

Moreover, the location apparatus 17 is not limited to being carried on a vessel. Cameras 11,12,14,15 may be mounted on other craft, including drones and aircraft, and feed the outputs to the processing portion 16 of the location apparatus 17. The processing portion 16 may located away from the rescue vessel too but in communication with the cameras 11,12,14,15. The location apparatus 17 may be able to control the life boat 3 remotely to the survivors 2.

## Claims

1. An apparatus (17) for locating a body (2), comprising:
a plurality of receiving means (11, 12, 14, 15) for receiving emission and/or reflection from the body and for outputting a response in terms of presence and bearing when such emission or reflection is received;
comparison means (16) for comparing the output response from the different receiving means and generating a body present output if output responses received from at least two of the receiving means indicate substantially the same bearing; and
memory means for memorising such a body present output as a body location;
wherein the plurality of receiving means (11, 12, 14, 15) are configured to additionally output a response in terms of shape of the body when such emission or reflection is received; and
wherein the comparison means (16) is adapted to compare the shape output response from the different receiving means with a collection of body images (20) to refine recognition of the body.

2. An apparatus for locating a body according to claim 1, wherein at least one of the receiving means (11, 12, 14, 15) is adapted to output a response in terms of body range, whereby the body location can comprise a range and bearing of the body.

3. An apparatus for locating a body according to claim 1 or claim 2, wherein the comparison means (16) is adapted to generate a body present output if one of the receiving means receives a signal characteristic of its mode of operation at one bearing and another receiving means receives a signal characteristic of its different mode of operation at substantially the same bearing.

4. An apparatus for locating a body according to any preceding claim, wherein the plurality of receiving means comprises at least one thermal sensor (11, 12), optionally an infra-red sensor with sensitivity in a wavelength range of 1.3 to 4 µm and/or sensitivity in a wavelength range of 8-12 µm.

5. An apparatus for locating a body according to claim 4, wherein the at least one thermal sensor (11, 12) is adapted to sense infra-red emission emitted from at least a face of the body, and /or wherein the at least one thermal sensor is adapted to sense a temperature difference between a survival suit on the body partially exposed to the air from that of the surrounding sea, at least at closer range, such as a range of less than 200m.

6. An apparatus for locating a body according to claim 4 or 5, wherein the at least one thermal sensor (11, 12) is adapted to sense light with the spectrum expected from reflection off fluorescent strips, optionally wherein the spectrum expected from refection off fluorescent strips comprises short wave infra-red light in the presence of infra-red light incident on the fluorescent strips from a short wave infra-red transmitter.

7. An apparatus for locating a body according to any preceding claim, wherein the plurality of receiving means (11, 12, 14, 15) comprises at least one visible light sensor (11, 12) having sensitivity in a wavelength range of 380 to 750nm, optionally wherein the at least one visible light sensor (11, 12) is adapted to sense light with the spectrum expected from reflection off reflective strips (5), optionally wherein the spectrum expected from reflection off reflective strips comprises reflected wavelengths corresponding to colours used by reflective strip manufacturers.

8. An apparatus for locating a body according to claim 7, when dependent on claim 4, wherein the at least one visible light sensor (11, 12) is combined with (the) at least one thermal sensor in binocular form such that the combination of the at least one visible light sensor and the at least one thermal sensor are adapted for generating a response indicative of range.

9. An apparatus for locating a body according to any preceding claim, wherein the plurality of receiving means (11, 12, 14, 15) comprises at least one sensor able to time reflected emissions from the sensor for sensing the range of the body, optionally wherein the at least one sensor able to time reflected emissions from the sensor is a radar or a lidar (14, 15).

10. An apparatus for locating a body according to any preceding claim, wherein the plurality of receiving means (11, 12, 14, 15) comprises at least one infrared (IR) sensor, optionally at least two infrared (IR) sensors.

11. An apparatus for locating a body according to any preceding claim, wherein the response in terms of shape of the body is output in a common format from each of the receiving means, optionally wherein the common format is a visually recognisable image.

12. An apparatus for locating a body according to any preceding claim, wherein the comparison means (16) is adapted to compare the shape output response from different receiving means, optionally wherein the comparison means is configured to generate a body present output if output responses received from at least two of the receiving means indicate substantially the same shape output.

13. An apparatus for locating a body according to any preceding claim, wherein the comparison means (16) is adapted to generate a body present output if an output response received from at least one of the receiving means matches at least one of the collection of body images.

14. A vessel (3) comprising an apparatus (17) for locating a body (2) according to any preceding claim.

15. A method for locating a body using an apparatus (17) for locating a body in accordance with any preceding claim, the method comprising:
receiving emission and/or reflection from a body at the plurality of receiving means (11, 12, 14, 15) for receiving emission and/or reflection from the body;
outputting from the receiving means a response in terms of presence and bearing when such emission or reflection is received;
outputting from the receiving means a response in terms of shape of the body when such emission or reflection is received
comparing the output response from the different receiving means with the comparison means (16) for comparing the output responses;
comparing the shape output response from the different receiving means with a collection of body images to refine recognition of the body
generating a body present output with the comparison means if output responses received from at least two of the receiving means indicate substantially the same bearing; and
memorising such a body present output as a body location at the memory means for memorising.

## Patentansprüche

1. Einrichtung (17) zur Ortung eines Körpers (2), umfassend:
eine Vielzahl von Empfangsmitteln (11, 12, 14, 15) zum Empfangen von Emission und/oder Reflexion von dem Körper und zum Ausgeben einer Antwort in Bezug auf Vorhandensein und Peilung, wenn eine solche Emission oder Reflexion empfangen wird;
Vergleichsmittel (16) zum Vergleichen der Ausgabeantwort von den unterschiedlichen Empfangsmitteln und zum Erzeugen einer Ausgabe "Körper vorhanden", wenn von mindestens zwei der Empfangsmittel empfangene Ausgabeantworten im Wesentlichen die gleiche Peilung anzeigen; und
Speichermittel zum Speichern einer solchen Ausgabe "Körper vorhanden" als Ort des Körpers;
wobei die Vielzahl von Empfangsmitteln (11, 12, 14, 15) dazu ausgebildet ist, zusätzlich eine Antwort in Bezug auf die Form des Körpers auszugeben, wenn eine solche Emission oder Reflexion empfangen wird; und
wobei die Vergleichsmittel (16) dazu angepasst sind, die Form-Ausgabeantwort von den unterschiedlichen Empfangsmitteln mit einer Sammlung von Körperbildern (20) zu vergleichen, um die Erkennung des Körpers zu verfeinern.

2. Einrichtung zur Ortung eines Körpers nach Anspruch 1, wobei mindestens eines der Empfangsmittel (11, 12, 14, 15) dazu angepasst ist, eine Antwort in Bezug auf Entfernung des Körpers auszugeben, wobei der Ort des Körpers eine Entfernung und Peilung des Körpers umfassen kann.

3. Einrichtung zur Ortung eines Körpers nach Anspruch 1 oder Anspruch 2, wobei die Vergleichsmittel (16) dazu angepasst sind, eine Ausgabe "Körper vorhanden" zu erzeugen, wenn eines der Empfangsmittel ein Signal, das für seinen Betriebsmodus charakteristisch ist, bei einer Peilung empfängt und ein anderes Empfangsmittel ein Signal, das für seinen unterschiedlichen Betriebsmodus charakteristisch ist, bei im Wesentlichen der gleichen Peilung empfängt.

4. Einrichtung zur Ortung eines Körpers nach einem der vorstehenden Ansprüche, wobei die Vielzahl von Empfangsmitteln mindestens einen Wärmesensor (11, 12) umfasst, wahlweise einen Infrarotsensor mit Empfindlichkeit in einem Wellenlängenbereich von 1,3 bis 4 µm und/oder Empfindlichkeit in einem Wellenlängenbereich von 8-12 µm.

5. Einrichtung zur Ortung eines Körpers nach Anspruch 4, wobei der mindestens eine Wärmesensor (11, 12) dazu angepasst ist, von zumindest einem Gesicht des Körpers emittierte Infrarotemission zu erfassen, und/oder wobei der mindestens eine Wärmesensor dazu angepasst ist, einen Temperaturunterschied zwischen einem Überlebensanzug auf dem Körper, der teilweise der Luft ausgesetzt ist, zu derjenigen des umgebenden Meeres zu erfassen, zumindest bei geringerer Entfernung, wie beispielsweise einer Entfernung von weniger als 200 m.

6. Einrichtung zur Ortung eines Körpers nach Anspruch 4 oder 5, wobei der mindestens eine Wärmesensor (11, 12) dazu angepasst ist, Licht mit dem Spektrum zu erfassen, das von der Reflexion auf fluoreszierende Streifen erwartet wird, wobei wahlweise das von der Reflexion auf fluoreszierende Streifen erwartete Spektrum kurzwelliges Infrarotlicht bei Vorhandensein von auf fluoreszierende Streifen von einem kurzwelligen Infrarotsender einfallendem Infrarotlicht umfasst.

7. Einrichtung zur Ortung eines Körpers nach einem der vorstehenden Ansprüche, wobei die Vielzahl von Empfangsmitteln (11, 12, 14, 15) mindestens einen Sensor für sichtbares Licht (11, 12) mit Empfindlichkeit in einem Wellenlängenbereich von 380 bis 750 nm umfasst, wobei wahlweise der mindestens eine Sensor für sichtbares Licht (11, 12) dazu angepasst ist, Licht mit dem Spektrum zu erfassen, das von der Reflexion auf reflektierende Streifen (5) erwartet wird, wobei wahlweise das von der Reflexion auf reflektierende Streifen erwartete Spektrum reflektierte Wellenlängen umfasst, die Farben entsprechen, die von Herstellern reflektierender Streifen verwendet werden.

8. Einrichtung zur Ortung eines Körpers nach Anspruch 7, wenn abhängig von Anspruch 4, wobei der mindestens eine Sensor für sichtbares Licht (11, 12) mit mindestens einem (dem mindestens einen) Wärmesensor in Fernglasform kombiniert ist, so dass die Kombination des mindestens einen Sensors für sichtbares Licht und des mindestens einen Wärmesensors dazu angepasst ist, eine Antwort zu erzeugen, die auf Entfernung hinweisend ist.

9. Einrichtung zur Ortung eines Körpers nach einem der vorstehenden Ansprüche, wobei die Vielzahl von Empfangsmitteln (11, 12, 14, 15) mindestens einen Sensor umfasst, der dazu in der Lage ist, vom Sensor reflektierte Emissionen zeitlich zu erfassen, um die Entfernung des Körpers zu erfassen, wobei der mindestens eine Sensor, der dazu in der Lage ist, vom Sensor reflektierte Emissionen zeitlich zu erfassen, wahlweise ein Radar oder ein Lidar (14, 15) ist.

10. Einrichtung zur Ortung eines Körpers nach einem der vorstehenden Ansprüche, wobei die Vielzahl von Empfangsmitteln (11, 12, 14, 15) mindestens einen Infrarotsensor (IR-Sensor), wahlweise mindestens zwei Infrarotsensoren (IR-Sensoren), umfasst.

11. Einrichtung zur Ortung eines Körpers nach einem der vorstehenden Ansprüche, wobei die Antwort in Bezug auf die Form des Körpers von jedem der Empfangsmittel in einem einheitlichen Format ausgegeben wird, wobei das einheitliche Format wahlweise ein visuell erkennbares Bild ist.

12. Einrichtung zur Ortung eines Körpers nach einem der vorstehenden Ansprüche, wobei die Vergleichsmittel (16) dazu angepasst sind, die Form-Ausgabeantwort von unterschiedlichen Empfangsmitteln zu vergleichen, wobei die Vergleichsmittel wahlweise dazu ausgebildet sind, eine Ausgabe "Körper vorhanden" zu erzeugen, wenn von mindestens zwei der Empfangsmittel empfangene Ausgabeantworten im Wesentlichen die gleiche Form-Ausgabe anzeigen.

13. Einrichtung zur Ortung eines Körpers nach einem der vorstehenden Ansprüche, wobei die Vergleichsmittel (16) dazu angepasst sind, eine Ausgabe "Körper vorhanden" zu erzeugen, wenn eine von mindestens einem der Empfangsmittel empfangene Ausgabeantwort mit mindestens einem der Sammlung von Körperbildern übereinstimmt.

14. Wasserfahrzeug (3) umfassend eine Einrichtung (17) zur Ortung eines Körpers (2) nach einem der vorstehenden Ansprüche.

15. Verfahren zur Ortung eines Körpers unter Verwendung einer Einrichtung (17) zur Ortung eines Körpers in Übereinstimmung mit einem der vorstehenden Ansprüche, wobei das Verfahren Folgendes umfasst:
Empfangen von Emission und/oder Reflexion von einem Körper bei der Vielzahl von Empfangsmitteln (11, 12, 14, 15) zum Empfangen von Emission und/oder Reflexion von dem Körper;
Ausgeben, von den Empfangsmitteln, einer Antwort in Bezug auf Vorhandensein und Peilung, wenn eine solche Emission oder Reflexion empfangen wird;
Ausgeben, von den Empfangsmitteln, einer Antwort in Bezug auf die Form des Körpers, wenn eine solche Emission oder Reflexion empfangen wird
Vergleichen der Ausgabeantwort von den unterschiedlichen Empfangsmitteln mit den Vergleichsmitteln (16) zum Vergleichen der Ausgabeantworten;
Vergleichen der Form-Ausgabeantwort von den unterschiedlichen Empfangsmitteln mit einer Sammlung von Körperbildern, um die Erkennung des Körpers zu verfeinern
Erzeugen einer Ausgabe "Körper vorhanden" mit den Vergleichsmitteln, wenn von mindestens zwei der Empfangsmittel empfangene Ausgabeantworten im Wesentlichen die gleiche Peilung anzeigen; und
Speichern einer solchen Ausgabe "Körper vorhanden" als Ort des Körpers bei den Speichermitteln zum Speichern.

## Revendications

1. Appareil (17) de localisation d'un corps (2), comprenant :
une pluralité de moyens de réception (11, 12, 14, 15) pour recevoir une émission et/ou une réflexion provenant du corps et pour délivrer en sortie une réponse en termes de présence et de relèvement lorsque ladite émission ou réflexion est reçue ;
des moyens de comparaison (16) pour comparer la réponse délivrée en sortie provenant des différents moyens de réception et pour générer une sortie de présence de corps lorsque des réponses délivrées en sortie, reçues par au moins deux des moyens de réception, indiquent sensiblement le même relèvement ; et
des moyens de mémorisation pour mémoriser une telle sortie de présence de corps en tant que localisation du corps ;
dans lequel la pluralité de moyens de réception (11, 12, 14, 15) est configurée pour, en outre, délivrer en sortie une réponse en termes de forme du corps lorsque ladite émission ou réflexion est reçue ; et
dans lequel les moyens de comparaison (16) sont adaptés à comparer la réponse de sortie en termes de forme du corps provenant des différents moyens de réception avec une collection d'images de corps (20) afin d'affiner la reconnaissance du corps.

2. Appareil de localisation d'un corps selon la revendication 1, dans lequel au moins un des moyens de réception (11, 12, 14, 15) est adapté à délivrer en sortie une réponse en termes de distance du corps, de telle sorte que la localisation du corps peut comprendre une distance et un relèvement du corps.

3. Appareil de localisation d'un corps selon la revendication 1 ou la revendication 2, dans lequel les moyens de comparaison (16) sont adaptés à générer une sortie de présence de corps si l'un des moyens de réception reçoit un signal caractéristique de son mode de fonctionnement pour un relèvement et un autre moyen de réception reçoit un signal caractéristique de son mode de fonctionnement différent à sensiblement le même relèvement.

4. Appareil de localisation d'un corps selon une quelconque revendication précédente, dans lequel la pluralité de moyens de réception comprend au moins un capteur thermique (11, 12), facultativement un capteur infrarouge avec une sensibilité dans une plage de longueurs d'onde allant de 1,3 à 4 µm et/ou une sensibilité dans une plage de longueurs d'onde allant de 8 à 12 µm.

5. Appareil de localisation d'un corps selon la revendication 4, dans lequel ledit au moins un capteur thermique (11, 12) est adapté à détecter une émission infrarouge émise par au moins un visage du corps, et/ou dans lequel ledit au moins un capteur thermique est adapté à détecter une différence de température entre une combinaison de survie portée par le corps, partiellement exposée à l'air, et celle de la mer environnante, au moins à une distance relativement proche, telle qu'une distance inférieure à 200 m.

6. Appareil de localisation d'un corps selon la revendication 4 ou la revendication 5, dans lequel ledit au moins un capteur thermique (11, 12) est adapté à détecter une lumière ayant le spectre attendu de la réflexion sur des bandes fluorescentes, facultativement dans lequel le spectre attendu de la réflexion sur des bandes fluorescentes comprend une lumière infrarouge à ondes courtes en présence d'une lumière infrarouge incidente sur les bandes fluorescentes provenant d'un émetteur infrarouge à ondes courtes.

7. Appareil de localisation d'un corps selon une quelconque revendication précédente, dans lequel la pluralité de moyens de réception (11, 12, 14, 15) comprend au moins un capteur de lumière visible (11, 12) présentant une sensibilité dans une plage de longueurs d'onde allant de 380 à 750 nm,
facultativement dans lequel ledit au moins un capteur de lumière visible (11, 12) est adapté à détecter une lumière ayant le spectre attendu de la réflexion sur des bandes réfléchissantes (5), facultativement dans lequel le spectre attendu de la réflexion sur des bandes réfléchissantes comprend des longueurs d'onde réfléchies correspondant à des couleurs utilisées par des fabricants de bandes réfléchissantes.

8. Appareil de localisation d'un corps selon la revendication 7, lorsque celle-ci dépend de la revendication 4, dans lequel l'au moins un capteur de lumière visible (11, 12) est combiné avec l'au moins un capteur thermique sous forme binoculaire de telle sorte que la combinaison dudit au moins un capteur de lumière visible et dudit au moins un capteur thermique est adaptée pour générer une réponse indicative de distance.

9. Appareil de localisation d'un corps selon une quelconque revendication précédente, dans lequel la pluralité de moyens de réception (11, 12, 14, 15) comprend au moins un capteur apte à mesurer le temps d'émissions réfléchies provenant du capteur pour détecter la distance du corps, facultativement dans lequel ledit au moins un capteur apte à mesurer le temps d'émissions réfléchies provenant du capteur est un radar ou un lidar (14, 15).

10. Appareil de localisation d'un corps selon une quelconque revendication précédente, dans lequel la pluralité de moyens de réception (11, 12, 14, 15) comprend au moins un capteur infrarouge (IR), facultativement au moins deux capteurs infrarouges (IR).

11. Appareil de localisation d'un corps selon une quelconque revendication précédente, dans lequel la réponse en termes de forme du corps est délivrée en sortie dans un format commun par chacun des moyens de réception, facultativement dans lequel le format commun est une image visuellement reconnaissable.

12. Appareil de localisation d'un corps selon une quelconque revendication précédente, dans lequel les moyens de comparaison (16) sont adaptés à comparer la réponse de sortie en termes de forme du corps provenant de différents moyens de réception, facultativement dans lequel les moyens de comparaison sont configurés pour générer une sortie de présence de corps si des réponses délivrées en sortie, reçues par au moins deux des moyens de réception, indiquent sensiblement la même réponse de sortie en termes de forme du corps.

13. Appareil de localisation d'un corps selon une quelconque revendication précédente, dans lequel les moyens de comparaison (16) sont adaptés à générer une sortie de présence de corps si une réponse délivrée en sortie reçue par au moins un des moyens de réception correspond à au moins une image de la collection d'images de corps.

14. Navire (3) comprenant un appareil (17) de localisation d'un corps (2) selon une quelconque revendication précédente.

15. Procédé de localisation d'un corps en utilisant un appareil (17) de localisation d'un corps conformément à une quelconque revendication précédente, le procédé comprenant :
la réception, par la pluralité de moyens de réception (11, 12, 14, 15), d'une émission et/ou d'une réflexion provenant d'un corps, pour recevoir une émission et/ou une réflexion provenant du corps ;
la délivrance en sortie, par les moyens de réception, d'une réponse en termes de présence et de relèvement lorsque ladite émission ou réflexion est reçue ;
la délivrance en sortie, par les moyens de réception, d'une réponse en termes de forme du corps lorsque ladite émission ou réflexion est reçue ;
la comparaison de la réponse délivrée en sortie provenant des différents moyens de réception par les moyens de comparaison (16) pour comparer les réponses délivrées en sortie ;
la comparaison de la réponse de sortie en termes de forme du corps provenant des différents moyens de réception avec une collection d'images de corps afin d'affiner la reconnaissance du corps ;
la génération d'une sortie de présence de corps par les moyens de comparaison lorsque des réponses délivrées en sortie, reçues par au moins deux des moyens de réception, indiquent sensiblement le même relèvement ; et
la mémorisation, au niveau des moyens de mémorisation, d'une telle sortie de présence de corps en tant que localisation du corps pour mémoriser.
